# EUROPÄISCHE PATENTSCHRIFT

(11) **EP 0 355 264 B1**
(45) Veröffentlichungstag und Bekanntmachung des Hinweises auf die Patenterteilung: **21.09.1994**
(21) Anmeldenummer: 89107425.4
(22) Anmeldetag: 25.04.1989
(51) Int. Cl.: G06M 1/28, G01C 22/00, H02K 37/14, H02K 3/46

(54) **Einrichtung zur Verstellung eines rückstellbaren Zählwerks**
Device for setting a resettable counting register
Dispositif pour le réglage d'un compteur réglable

(30) Priorität: 22.08.1988 DE 3828463
(43) Veröffentlichungstag der Anmeldung: 28.02.1990
(73) Patentinhaber: VDO Adolf Schindling AG, D-60487 Frankfurt (DE)
(72) Erfinder: Sudler, Roland, D-6000 Frankfurt/Main (DE)
(74) Vertreter: Klein, Thomas, Dipl.-Ing. (FH)

(56) Entgegenhaltungen:
- EP-A- 0 248 472
- DE-A- 2 732 364
- DE-B- 1 297 917
- US-A- 4 009 373
- US-A- 4 115 713
- PATENT ABSTRACTS OF JAPAN vol. 005, no. 069 (P-060) 9. Mai 1981; & JP-A-56017490
- PATENT ABSTRACTS OF JAPAN vol. 009, no. 106 (E-313) 10 Mai 1985;& JP-A-59230447

## Beschreibung

Die Erfindung betrifft eine Einrichtung zur Verstellung eines rückstellbaren mechanischen Zählwerks nach dem Oberbegriff des Anspruchs 1.

Eine bekannte Kreuzspul-Drehmagnetanordnung ist speziell als Motor zum Antrieb eines Uhrwerks ausgebildet (DE-OS 34 19 100). In diesem Motor weist ein drehbar gelagerter Rotor sich diametral gegenüberliegende Dauermagnetpole auf. Eine mehrphasige Spulenanordnung dient zur Erzeugung eines den Rotor auslenkenden Magnetfelds in Abhängigkeit von Ansteuersignalen, die an Spulen der Spulenanordnung anliegen. Die Spulenanordnung weist dazu mehrere, mit gleichem Winkelabstand zueinander angeordnete, den Rotor umschließende Spulen auf, die mit um eine bestimmte Phasenverschiebung versetzten Sinus-Spannungen ansteuerbar sind. Insbesondere besteht die Spülenanordnung aus zwei rechtwinklig zueinander angeordneten Spulen, die mit zwei um 90° versetzten Sinus-Spannungen gespeist werden. Die Drehachse bzw. Welle kann die Sekundenwelle oder die Minutenwelle des Uhrwerks darstellen. Im letztgenannten Fall ist an einem Ende der Drehachse ein Minutenzeiger befestigt, der über ein Zifferblatt bewegt werden kann. Über ein auf der Drehachse angeordnetes Antriebsritzel und ein Wechselrad wird ein Stundenrad angetrieben, welches ein die Drehachse umschließendes Stundenrohr aufweist.

Dieser zum Antrieb eines Uhrwerks ausgebildete Motor mit Antriebsritzel, Wechselrad und Stundenrad sowie einem Stundenrohr ist nicht zur Verstellung eines rückstellbaren mechanischen Zählwerks vorgesehen. Hierzu kann er auch nicht ohne weiteres eine kompakte Baueinheit insbesondere mit einem Rollenzählwerk bilden. Außerdem fehlt eine Rückstelleinrichtung für das Zählwerk.

Bei einer zum Stand der Technik gehörenden Einrichtung zur Anzeige einer mechanischen Größe, insbesondere der Geschwindigkeit eines Kraftfahrzeugs, ist eine zur Verstellung eines Zeigers dienendes Meßwerk vorgesehen, welches über einen Umsetzer mit einem einen Puls mit der Meßgröße proportionaler Pulsfrequenz erzeugenden Geber in Verbindung steht (De-OS 27 30 699). Als Meßwerk dient ein vor- und rückwärts laufender Schrittmotor. Dieser wird mit einer richtungsbewerteten Impulsfolge gespeist, welche aus während aufeinanderfolgenden definierten Zeitintervallen in Abhängigkeit von der Meßgröße gebildeten Zählwerten, die miteinander verglichen eine vorzeichenbewertete Differenzzahl ergeben, erzeugt wird. Der sich entsprechend dieser Differenzzahl einstellende Schrittmotor ist über ein Getriebe mit einem Zeigerwerk gekuppelt. - Dieser Schrittmotor eignet sich jedoch nicht ohne weiteres zur Verstellung eines rückstellbaren mechanischen Zählwerks, insbesondere eines Rollenzählwerks zur Wegstreckenzählung, da eine Rückstellung durch das antreibende Ritzel des Schrittmotors, wenn sie überhaupt funktioniert, zumindest zu lange dauern würde, was die Rollen der höheren Zahlenstellen betrifft.

Üblicherweise werden Kilometerzähler oder andere Rollenzählwerke mit einem Schrittmotor angetrieben, der nur in einer Richtung läuft. Die Rückstellung des Zählwerks erfolgt entweder manuell, durch einen Hubmagnet oder einen weiteren Motor. Die Rückstellung erfolgt dabei über eine sogenannte Nullstellachse, die ihrerseits über Herzkurven die einzelnen Rollen eines Rollenzählwerks durch eine kurzzeitige Drehung von maximal 180° zurückstellen kann. Zu dieser Rückstellung ist ein gesonderter Antrieb mit Rückstellmechanismus erforderlich.

Aus der DE-A 27 32 364 ist ein Einphasenschrittmotor zum Antrieb eines Uhrwerks bekannt, der einen auf einer Welle befestigten mehrpoligen Dauermagnetanker aufweist. Der Dauermagnetanker ist von einem in zwei Teile geteilten Spulenkörper umschlossen, der zur Aufnahme der Spulen dient. Der Spulenkörper weist zwei Lager zum Lagern der Welle auf, welche an einer Seite aus dem Spulenkörper herausragt und mit diesem Ende zum Antrieb des Zeigerwerks der Uhr dient.

Aus der US-A-40 09 373 ist ein elektro-mechanisches Rollenzählwerk insbesondere für eine Tanksäulenanzeige bekannt, dessen Zahlenrollen mittels eines Schrittmotors antreibbar sind. Durch den Antrieb der niedrigstwertigen Zahlenrolle mittels des Schrittmotors wird gleichzeitig eine Feder eines Rückstellmechanismus gespannt, welche anschließend ein Zurückstellen der Zahlenrollen bewirkt.

Der vorliegenden Erfindung liegt die Aufgabe zugrunde, unter Verwendung nur eines einzigen Schrittmotors eine rasche Rückstellung eines mechanischen Zählwerks, insbesondere Rollenzählwerks, zu erzielen. Der Schrittmotor, ein mit diesem zum Antrieb des Zählwerks gekuppeltes Getriebe sowie die Rückstellung sollen dabei eine kompakte Einheit bilden.

Diese Aufgabe wird durch die Ausbildung der Einrichtung der eingangs genannten Gattung mit den in dem kennzeichnendeen Teil des Anspruchs 1 angegebenen Merkmalen gelöst.

Durch die Ausbildung des Schrittmotors mit einem geteilten Spulenkörper, auf dessen vorderer Außenseite das in einen Zwischenkörper eingeschlossene Getriebe angebracht bzw. angeklipst werden kann, in welches ein Ritzel an einer aus dem Spulenkörper herausragenden Welle eingreift, wird eine raumsparende Einheit geschaffen, an die die zusätzliche, erfindungsgemäß vorgesehene Freilaufkupplung unter Aufrechterhaltung des kompakten Aufbaus angebracht werden kann, ebenso das Zählwerk, insbesondere Rollenzählwerk, mit der zugehörigen Rückstelleinrichtung. Dadurch, daß das Getriebe außer mit dem Zählwerk über eine Freilaufkupplung mit der Rückstelleinrichtung des Zählwerks in Verbindung steht, kann der Schrittmotor neben der üblichen Funktion zum Verstellen des Zählwerks beim Hochzählen auch die Rückstellung des Zählwerks über eine Nullstellachse oder eine sonstige Rückstelleinrichtung bewirken, in dem ein mit dem Getriebe gekuppeltes Element, insbesondere eine Nockenscheibe, beim Rückwärtsdrehen des Schrittmotors auf die Rückstelleinrichtung einwirkt, während dieses Element, insbesondere die Nockenscheibe, bei Vorwärtsdrehung des Schrittmotors, wenn das Zählwerk im Sinne eines Hochzählens verstellt wird, entkuppelt ist. Durch den Freilauf kann also die Funktionstrennung - Hochzählen und Rückstellung - ohne weitere Steuerungsmaßnahmen allein in Abhängigkeit von der Drehrichtung des Schrittmotors erfolgen. Die gesamte Einrichtung kann mit nur wenigen unkomplizierten Teilen und damit in fertigungsgünstiger Weise realisiert werden; sie ist verschleißarm und robust.

Ein besonders kompakter Aufbau der Einrichtung zur Verstellung eines Rollenzählwerks mit platzsparender Innenverzahnung wird nach Anspruch 2 durch die Weiterbildung ermöglicht, daß die aus dem Zwischenkörper bzw. dem Getriebe auf dessen dem Spulenkörper abgewandten Seite herausragende Abtriebswelle des Getriebes exzentrisch angeordnet ist. Damit kann das Rollenzählwerk mit seiner Hauptachse achsgleich mit der Motorwelle und der Hauptachse des Getriebes zu einer vorzugsweise annähernd zylindrischen Raumform angeordnet werden, bei der die einzelnen Komponenten der Einrichtung - Motor, Getriebe, Rollenzählwerk - praktisch ohne axiale Lücken aufeinanderfolgen. Das Ritzel auf der Abtriebswelle des Getriebes greift dabei in eine Innenverzahnung eines zu dem Rollenzählwerk gehörenden ersten Triebrads in raumsparender und geschützter Weise ein.

Dabei ist die Einrichtung weiter vorteilhaft im einzelnen mit den in dem Anspruch 3 angegebenen Merkmalen ausgebildet. Durch die Nockenscheibe zur Rückstellung der Nullstellachse oder einer sonstigen Rückstelleinrichtung und die von der Nockenscheibe umschlossene Freilaufkupplung tritt dabei nur eine verhältnismäßig geringfügige axiale Verlängerung eines normalen ersten Triebrades ein. Dies gilt insbesondere, wenn die Einrichtung gemäß Anspruch 4 ausgebildet ist.

Die Freilaufkupplung kann in verschiedener Weise realisiert werden: besonders reibungsarm ist eine Kugel als bewegliches Mitnahmeelement gemäß Anspruch 4. Mit der Rolle als bewegliches Mitnahmeelement nach Anspruch 6 lassen sich auch größere Kräfte bei verhältnismäßig kleiner Reibung übertragen. Besonders robust ist ein Keil als bewegliches Mitnahmeelement nach Anspruch 7.

Alternativ zu der Ausbildung der Freilaufkupplung mit zwei einander diametral gegenüberliegenden Keilräumen, von denen jeder eines der voranstehend genannten Mitnahmeelemente aufnimmt, kann die Freilaufkupplung auch nach Anspruch 8 mit einem Zahnrichtgesperre aufgebaut werden, welches eine Klinke und mit dieser in Eingriff gelangende Sperrzähne umfaßt. Das Zahnrichtgesperre kann konventioneller Art sein; eine Sonderkonstruktion ist nicht erforderlich.

Weiter vorteilhafte Ausbildungen des Schrittmotors als Teil der Einrichtung zur Verstellung des Zählwerks sind in den Ansprüchen 9 - 14 angegeben:

Zur einfachen Fertigung der Bauteile des Schrittmotors sowie dessen Montage ist nach Anspruch 9 der Spulenkörper im wesentlichen in einer Querschnittsebene, d.h. senkrecht zu der zwischen den beiden Teilen des Spulenkörpers eingebauten Welle geteilt.

Zum Erreichen der voranstehend genannten Vorteile ist weiterhin zweckmäßig aus jedem der beiden Teile des Spulenkörpers eines der Lager der Welle ausgeformt. - Der Rotor wird zwischen den beiden Lagern in dem zylindrischen Innenraum des Spulenkörpers angeordnet. Zwei Wicklungen werden auf dem Spulenkörper als Stator um 90° gegeneinander verdreht so aufgebracht, daß sich die Leiter parallel zu der Welle jeweils zwischen zwei längs des Umfangs benachbarten Stegen befinden.

Der Stator des Schrittmotors ist vorteilhaft nach Anspruch 11 ausgebildet. Damit wird ohne ausgeprägte Pole infolge des magnetischen Rückschlusses eine Rastwirkung bzw. ein Rastmoment auf den Rotor ausgeübt, welches somit definierte Stellungen des Rotors bestimmt. Infolge des Rastmoments bei nicht erregter Wicklung kann die Ansteuerung mit kurzen Impulsen erfolgen, die eine geringe mittlere Stromaufnahme bedeuten. Es ist also nicht erforderlich, daß der Schrittmotor mit sinusförmigen Spannungen gespeist wird.

Für die Anwendung als Zwei-Phasen-Schrittmotor wird eine Dämpfung der Rotorbewegung mit einem Abschirmring aus ungeglühtem, minderwertigem Eisen erreicht, welches eine Restkoerzitivfeldstärke von ca. 5 Öe hat.

Durch die nasenförmigen Klipse an dem Spulenkörper nach Anspruch 12 erfolgt eine genaue Zentrierung sowie eine lagerichtige Zuordnung und Befestigung des Zwischenkörpers mit dem Getriebe.

Die durch die achsparallelen Bohrungen gesteckten Anschlußstifte, an denen der Schrittmotor befestigt werden kann, ragen nach Anspruch 14 zumindest aus einer Außenseite aus dem Spulenkörper und gegebenenfalls einem auf diesem aufgesetzten Getriebe in dem Zwischenstück heraus. Wenn die Anschlußstifte aus einer hinteren Außenseite des Spulenkörpers herausragen, kann daran z.B. eine Leiterplatte angebracht werden.

Die Erfindung wird im folgenden anhand einer Zeichnung mit elf Figuren erläutert. Es zeigen:
- Figuren 1a - 1d: in schaubildlicher Ansicht eine Ausführungsform des Schrittmotors mit einem in dem Zwischenkörper angeordneten Getriebe, und zwar in den Figuren 1b - 1d mit jeweils zunehmendem Zerlegungsgrad der Anordnung in der Art von Explosionszeichnungen;
- Figur 2: einen Längsschnitt im wesentlichen durch das Grundsystem des Schrittmotors, jedoch mit aufgesetztem Abschirmring und Ritzel;
- Figur 3: einen Schnitt entsprechend Figur 2, jedoch mit aufgesetztem Zwischenstück, welches ein Getriebe beinhaltet;
- Figur 4: eine Ansicht auf die Wellen-Seite des Schrittmotors nach Figur 2;
- Figur 5: ein vereinfachtes Blockschaltbild einer mit dem Schrittmotor aufgebauten Einrichtung zur Verstellung eines Zählwerks;
- Figuren 6a, 6b: zeitliche Verläufe von Spannungen, mit denen Spulen des Schrittmotors gespeist werden, in einer ersten Variante (Sinus/Kosinusansteuerung;
- Figuren 7a, 7b: entsprechende zeitliche Verläufe der Spannungen in einer zweiten Variante (Tangensansteuerung);
- Figur 8: die Einrichtung zur Verstellung eines rückstellbaren Rollenzählwerks mit einem ersten Triebrad, welches im Längsschnitt dargestellt ist;
- Figur 9: ein Element des ersten Triebrads, nämlich eine Triebscheibe mit Freilaufkupplung in einer Vorderansicht (mit geschnittenem Ritzel auf der Abtriebswelle des Getriebes);
- Figur 10: eine Variante des ersten Triebrads mit einem Zahnrichtgesperre in einer Vorderansicht und
- Figur 11: die Nockenscheibe als weiteres Element des ersten Triebrads ebenfalls in einer Draufsicht.

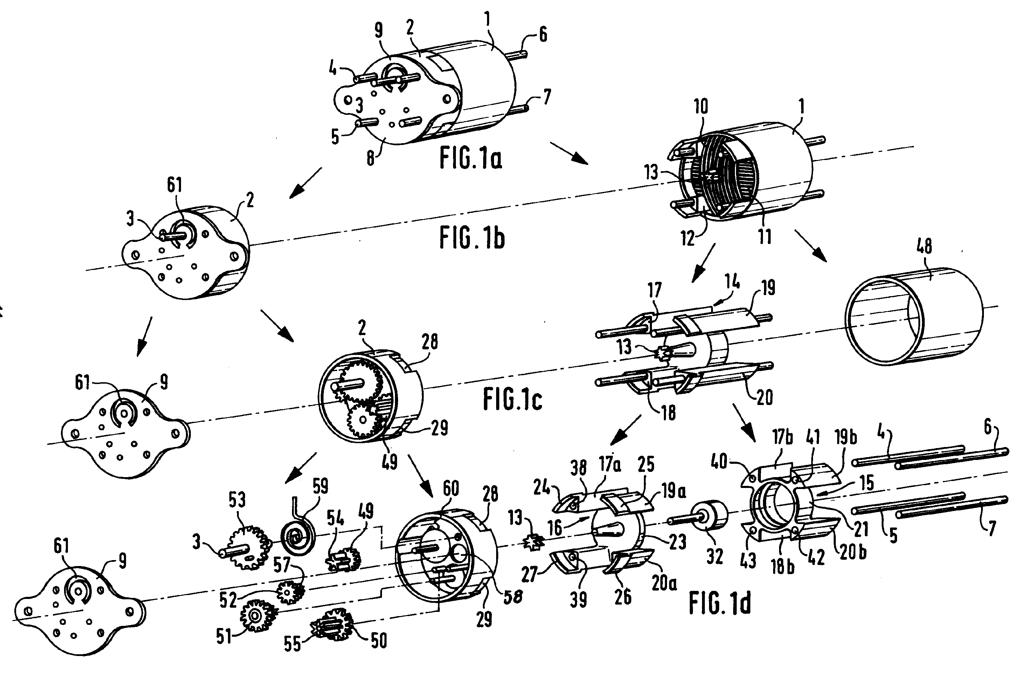

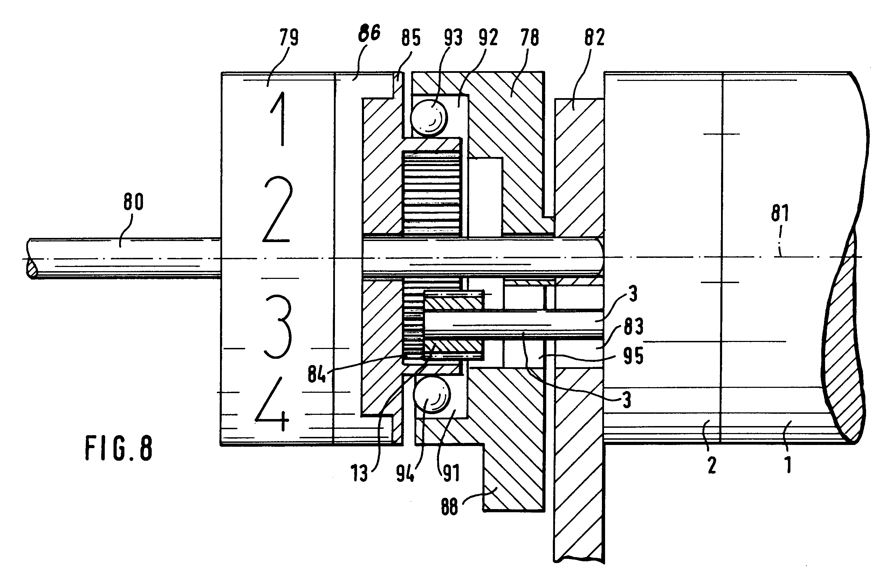

Aus Fig. 1a ist im zusammengesetzten Zustand ein Schrittmotor 1 mit angeklipstem Getriebe in einem Zwischenkörper 2 ersichtlich. Die Längsabmessungen des Schrittmotors und des Zwischenkörpers ergeben die relativ kleine Höhe h der Anordnung, die für den Einbau maßgeblich ist. Aus Fig. 1a ist weiterhin eine Abtriebswelle 3 des Getriebes ersichtlich, die exzentrisch aus dem Zwischenkörper 2 nach vorne herausragt.(Diese Abtriebswelle ist in Fig. 1a in umgekehrter Lage - auf dem Kopf stehend - zu der Lage in Fig. 8 dargestellt.) Durch den Schrittmotor und Zwischenkörper hindurchreichende Anschlußstifte, die beidseitig an den Außenseiten dieser Anordnung herausragen und die zur Befestigung dieser Anordnung dienen können, sind mit 4 - 7 bezeichnet. Die vordere Außenseite dieser Anordnung ist mit 8 bezeichnet; sie wird durch eine Platine 9 gebildet, welche den Zwischenkörper vorn abschließt. Die Außenseiten des Schrittmotors selbst sind in Fig. 1a verdeckt.

In Fig. 1b ist der Zwischenkörper, welcher das Getriebe beinhaltet, von dem Schrittmotor abgenommen, so daß in dem Schrittmotor zwei zueinander in einem Winkelabstand von 90° angeordnete Spulen 10 und 11 erkennbar sind, die zusammen eine Kreuzspule oder eine zwei-phasige Wicklung bilden. - Aus der vorderen Außenseite 12 des Schrittmotors ragt ein auf einer Welle befestigtes Ritzel 13 heraus, welches, wie weiter unten beschrieben, so in das Getriebe in dem Zwischenkörper eingeführt werden kann, daß es mit einem Zahnrad in dem Getriebe in Eingriff gelangt.

Aus den Figuren 1c und 1d sind weitere Einzelheiten des Aufbaus, insbesondere des Schrittmotors, erkennbar:

Danach besteht ein allgemein mit 14 bezeichneter Spulenkörper, der im wesentlichen in einer Querschnittsebene A-A geteilt ist - siehe Fig. 1 - aus zwei Spulenkörperteilen 15 und 16.

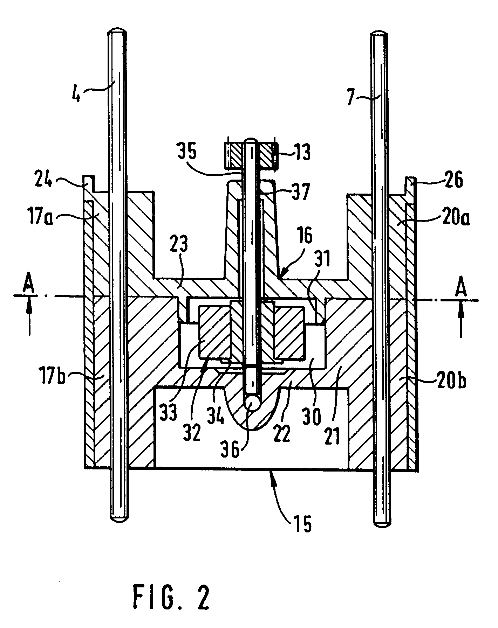

Der Spulenkörper 15 ist innen zylindrisch geformt und weist vier Stege 17 - 20 auf, deren Außenseiten zylindrisch gekrümmt sind. Gemäß Fig. 1d sind die Stege aus je einem vorderen Stegabschnitt 17a, 18a, 19a und 20a und einem hinteren Stegabschnitt 17b, 18b, 19b, 20b zusammengesetzt, welche die gleichen Querschnittsformen aufweisen. Die Stege sind so geformt, daß sie zwischen sich Kammern zur Aufnahme der beiden Spulen 10 und 11 bilden. Die hinteren Stegabschnitte 17b, 18b, 19b, 20b laufen zu einem zylindrischen Ring 21 zusammen, der innen durch eine Zwischenwand 22 - siehe Fig. 2 - geschlossen ist. Die vorderen Stegabschnitte 17a, 18a, 19a, 20a sind hingegen an einer vorderen Wand 23 angeformt. Von den vorderen Stegabschnitten 17a, 18a, 19a, 20a stehen zungenartige Klipse 24, 25, 26, 27 über, die zum form- und kraftschlüssigen Eingriff in entsprechende Ausnehmungen des Zwischenkörpers 2 vorgesehen sind, um diesen klammernd zu halten. In den Figuren 1c und 1d sind hiervon die Ausnehmungen 28 und 29 erkennbar. Die Ausnehmungen sind nutenförmig und dienen, da äquidistant über den Umfang des Zwischenkörpers verteilt, auch zum Zentrieren.

Der zylindrische Ring 21 des Spulenkörperteils 15 schließt einen ebenfalls zylindrischen Innenraum 30 ein, der nach vorne bzw. in Fig. 2 oben durch die mit einem zylindrischen Ansatz 31 versehene vordere Wand 23 des Spulenkörperteils 16 abgeschlossen ist. In dem zylindrischen Innenraum 30 ist ein Rotor gelagert, der allgemein mit 32 bezeichnet ist. Der Rotor besteht im wesentlichen aus einem Dauermagneten 33, der einander diametral gegenüberliegende Pole bildend magnetisiert ist. Der Rotor ist über eine Nabe 34 auf einer Welle 35 befestigt. Die Welle ist in je einem Lager 36 bzw. 37 in jedem der beiden Spulenkörperteile 15 bzw. 16 drehbar gelagert. An einem vorderen, aus dem Spulenkörperteil 16 hervorragenden Ende der Welle ist auf dieser ein Ritzel 13 fixiert.

Aus den Figuren 1c, 1d und 2 ist weiterhin ersichtlich, daß durch Bohrungen, z.B. 39, 39a in dem Spulenkörperteil 16 sowie Bohrungen 38 - 43 in dem Spulenkörperteil 15, die paarweise miteinander fluchten, Anschlußstifte 4 - 7 steckbar sind, die im wesentlichen zur Befestigung der Anordnung beispielsweise an gedruckten Leiterplatten dienen.

Weiterhin ist aus den Figuren 1c und 2 entnehmbar, daß außen auf die Stege ein zylindrischer Abschirmring 48 aus ferromagnetischem Material aufgeschoben werden kann, dessen Restkoerzitivfeldstärke zur Dämpfung des Schrittmotors ca. 5 Öe beträgt und der dazu aus ungeglühtem, minderwertigem Eisen bestehen kann. Wenn ein hohes Rastmoment bei nicht erregter Wicklung (stromlose Spulen) erzielt werden soll, wird hingegen ein ferromagnetisches Material mit hoher Restkoerzitivfeldstärke von beispielsweise 50 - 100 Öe eingesetzt.

Aus den Figuren 1c und 1d ergeben sich weiterhin Einzelheiten des in dem Zwischenkörper vorgesehenen Getriebes. Es wird im wesentlichen durch die Zahnräder 49 - 53 und die mit den Zahnrädern 49, 50, 51, 52 verbundenen Ritzel 54 - 57 gebildet, wobei die Zahnräder und Ritzel paarweise ineinander kämmen. Das Ritzel 13 auf der Welle 35 kann durch eine Öffnung 58 so in den Zwischenkörper gesteckt werden, daß es mit dem ersten Zahnrad 49 in Eingriff gelangt. Das Zahnrad 53 auf der Abtriebswelle des Getriebes ist mit der exzentrisch angeordneten Abtriebswelle 3 verbunden.

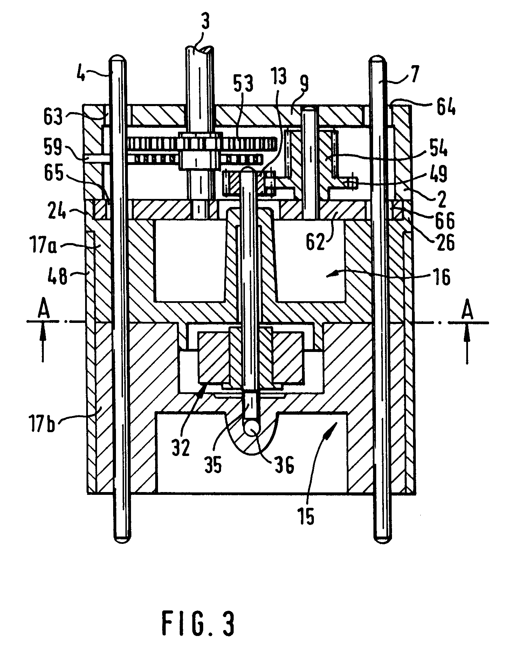

Aus der Darstellung der Schrittmotoranordnung in Fig. 3, die im wesentlichen derjenigen des in Fig. 2 dargestellten Grundsystems entspricht, sind außerdem einige Einzelheiten des Inneren des ein Getriebe beinhaltenden Zwischenkörpers 2 ersichtlich. Insbesondere kann dieser Fig. 3 entnommen werden, wie die Zahnräder und Ritzel in der vorderen Platine 9 und einer ihr auf der Rückseite entsprechenden Wand 62 gelagert sind. Weiterhin reichen gemäß Fig. 3 die Anschlußstifte - zu sehen sind die Anschlußstifte 4 und 7 - durch relativ große Bohrungen 63 - 66 in der Platine 9 und Wand 62 hindurch, so daß die Position der Anschlußstifte ausschließlich durch die Bohrungen in den Spulenkörperteilen 15, 16 bestimmt ist. - Das Lager 36 ist sowohl in Fig. 2 als auch in Fig. 3 so ausgebildet, daß es auch axiale Kräfte aufnehmen kann.

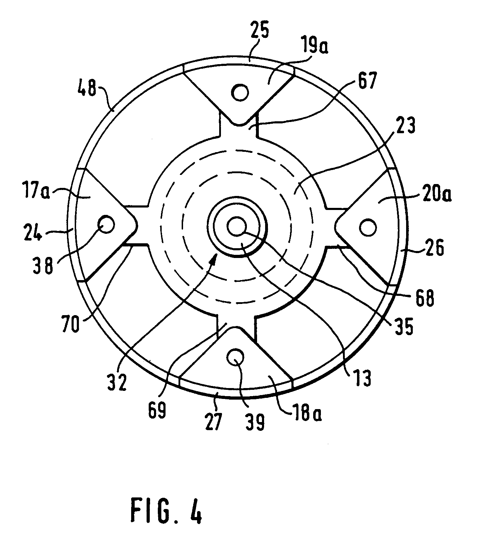

Aus Fig. 4 geht eine Ansicht auf die Vorderseite des Schrittmotors ohne aufgesetzten Zwischenkörper hervor: Erkennbar sind die äquidistant längs des Umfangs des im wesentlichen zylindrischen Spulenkörpers angeordneten Stege bzw. Stegabschnitte 17a, 18a, 19a, 20a mit den vorstehenden Klipsen 24 - 27, an deren rückwärtige Stirnseiten der auf den Spulenkörper aufgeschobene Abschirmring 48 anstößt. Die Stegabschnitte gehen an den Stellen 67 - 70 in die vordere Wand 23 über. Erkennbar ist weiterhin die zentrale Welle 35, an der das Ritzel 13 befestigt ist. Der durch die vordere Wand 23 abgedeckte Rotor 32 ist lediglich mit einer unterbrochenen Linie angedeutet.

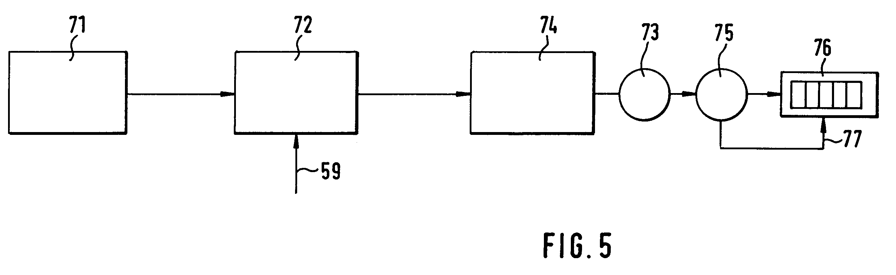

Die elektrische Ansteuerung des Schrittmotors kann zumindest für den Vorwärtslauf weitgehend konventionell erfolgen. Hierzu wird auf Fig. 5 Bezug genommen: Ein mit 71 bezeichneter Geber erzeugt Impulse, die insbesondere zurückgelegten Weginkrementen eines Fahrzeugs proportional sind. Über eine dem Geber nachgeschaltete Verarbeitungslogik 72 können die Impulse für die Vorwärtsrichtung nach Impulsformung zu einer Steuerlogik 74 für den Schrittmotor übertragen werden, in welcher die Spulen 10 und 11 - siehe Fig. 1b - des Stators speisende Spannungen erzeugt werden, die eine Kurvenform aufweisen, welche eine Drehbewegung des Rotors bewirken.

Die Verarbeitungslogik steuert die Steuerlogik so, daß für Impulse, die von dem Geber 71 abgegeben werden, ein eine Vorwärtsbewegung des Rotors bewirkender Spannungsverlauf in der Steuerlogik generiert wird. Wenn hingegen in einen Rückstelleingang 59 der Verarbeitungslogik 74 ein Rückstellsignal eingespeist wird, erzeugt die Verarbeitungslogik eine vorgegebene Anzahl von Impulsen (Impulspaket), welche die Steuerlogik 74 zur Abgabe eines eine definierte Rückwärtsbewegung des Rotors verursachenden Spannungsverlaufs beeinflußt. Das Impulspaket sorgt für einen automatischen Rücklauf innerhalb weniger als einer Sekunde.

In Fig. 5 sind schematisch der Schrittmotor 73 und das Getriebe mit Freilaufkupplung 75 dargestellt. Das Getriebe verstellt in Vorwärtsdrehrichtung die Rollen des Rollenzählwerks zum Hochzählen, wobei eine einem Nullstellhebel 77 des Rollenzählwerks zugeordnete Nockenscheibe 78 entkuppelt ist. Bei umgekehrter Drehrichtung des Schrittmotors 73 und einkuppelnder Nockenscheibe 78 erfolgt hingegen selbsttätig die Rückstellung über den Nullstellhebel 77.

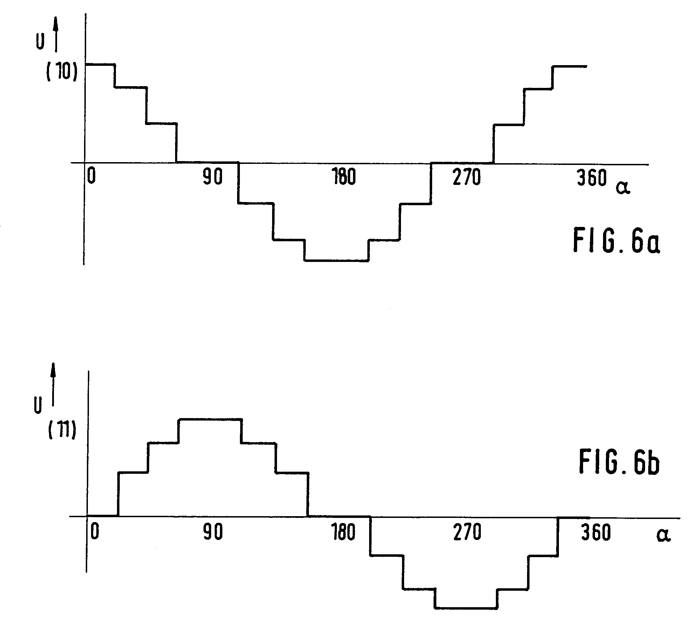

Gemäß den Figuren 6a und 6b werden in der Steuerlogik Spannungen U für die Spulen 10 und 11 erzeugt, die hier eine Vorwärtsdrehung des Rotors bewirken. Die Spannungen stellen für die Spule 10 eine stufenweise approximierte Kosinusfunktion und für die Spule 11 eine approximierte sinusförmige Kurvenform in Abhängigkeit von dem darzustellenden Zählwert α _{Soll} dar. Diese Kurvenformen der Spannungen durchlaufen für einen Durchlauf des Rotors von 360° eine volle Periode als zeitabhängig vorbestimmte Amplitudenfolge. Die Amplitudenfolgen können auch als zueinander phasenverschobene angenäherte sinusförmige oder kosinusförmige Spannungsverläufe aufgefaßt werden. Die stufenweise Approximierung der Sinusform und Kosinusform läßt sich mit digitalen Bauelementen leicht realisierten, z.B. bei einer festen Taktfrequenz über ein gesteuertes Tastverhältnis. Da die Verstellung des Rollenzählwerks durch den Schrittmotor über ein Getriebe erfolgt, welches in dem Zwischenkörper enthalten ist, genügt eine grobe Stufigkeit der Approximierung.

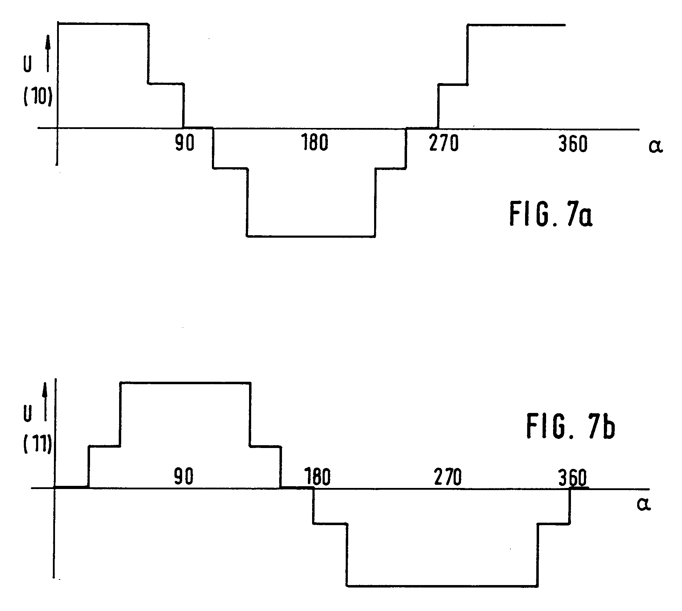

In der Variante nach den Figuren 7a und 7b werden als Spannungen für die Spulen 10 und 11 tangensförmig angenäherte Kurvenformen in der Steuerlogik 74 gebildet, die einen noch geringeren Aufwand zur Generierung als die voranstehend genannten sinus- und kosinusförmigen Kurvenformen ausreichen lassen.

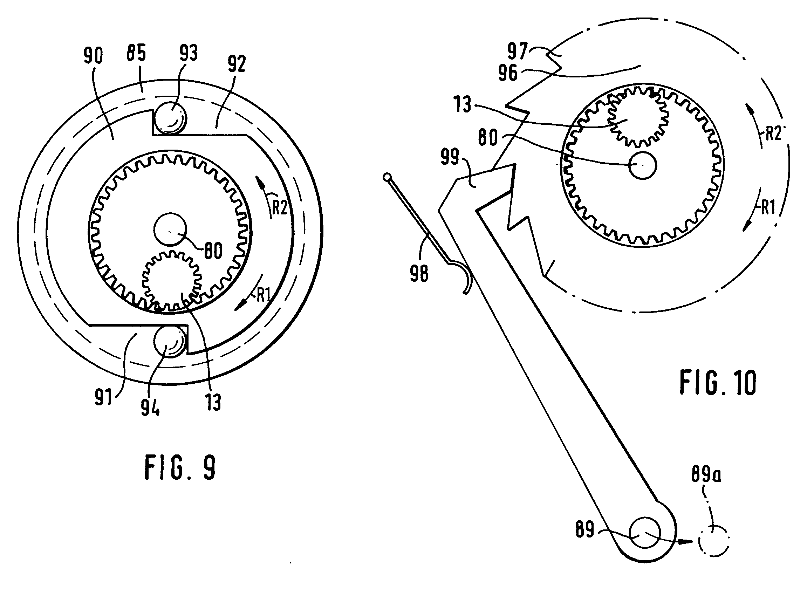

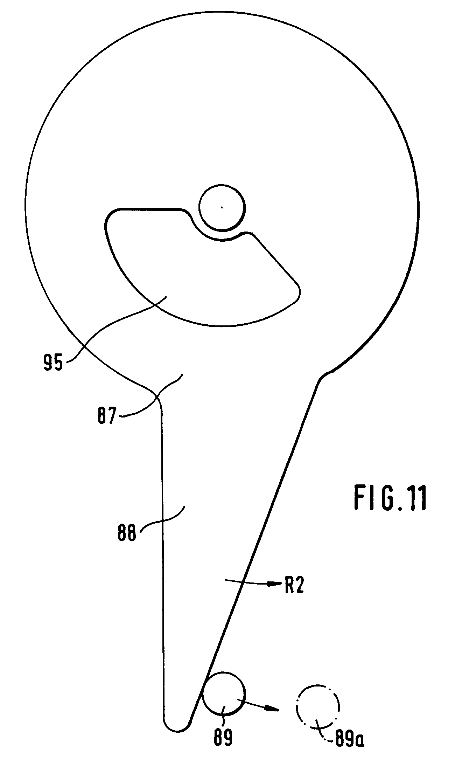

In Fig. 8 ist in größerer Darstellung die Einrichtung zur Verstellung eines rückstellbaren Rollenzählwerks mit einem ersten Triebrad im Längsschnitt gezeigt. Es fehlen in der Darstellung der rechte Teil des Schrittmotors 1 sowie Rollen eines Rollenzählwerks, von dem lediglich eine erste Zahlenrolle 79 gezeigt ist. Die Zahlenrollen sind um eine Achse 80 drehbar, die mit einer Hauptachse des Getriebes und des Motors fluchtet. Diese Hauptachse ist durch eine strichpunktierte Linie angedeutet. Zur Befestigung der Einrichtung dient ein Lagerbock 82, in den beispielsweise die in Fig. 8 nicht erkennbaren Anschlußstifte - siehe Anschlußstifte 4 - 7 in Fig. 1a - hineinreichen können. Rechts von dem Lagerbock sind der Motor 1 und das an ihn angeklipste Getriebe angeordnet. Durch eine Öffnung 83 in dem Lagerbock ragt die Abtriebswelle 3 des Getriebes mit dem Ritzel 13 in eine Innenverzahnung 84 einer Triebscheibe 85, die einen Teil eines ersten Triebrads 86 bildet und als solches mit der ersten Zahlenrolle 79 in Verbindung steht. Zu dem ersten Triebrad 86 gehört eine Nockenscheibe 78, die ebenfalls auf der Achse 80 gelagert ist. Die außen im wesentlichen zylindrische Nockenscheibe weist dort eine Nocke 88 auf, die zur Verstellung eines Nullstellhebels 89 - siehe Fig. 11 - an diesen anschlagen kann. Die Nockenscheibe umgreift einen zylindrischen Innenabschnitt 90 der ersten Triebscheibe, aus dem Keilräume 91, 92 ausgeformt sind, deren Form im einzelnen aus der Draufsicht in Fig. 9 hervorgeht. Die Keilform wird dabei jeweils nach außen durch die zylindrische Innenform des übergreifenden Abschnitts der Nockenscheibe 78 gebildet. Die Freilaufkupplung wird durch je eine Kugel 93 bzw. 94 in jedem der beiden Keilräume 91, 92 vervollständigt. - Bemerkenswert ist in der Darstellung nach Fig. 8 noch, daß der Motor,das Getriebe, das Rollenzählwerk mit der Zahlenrolle 79 sowie das erste Triebrad 86 eine kompakte, im wesentlichen zylindrische Einheit bilden.

Zu der Funktion der Freilaufkupplung wird insbesondere auf Fig. 9 Bezug genommen. Wenn die erste Triebscheibe 85 durch das Ritzel 13 in Richtung des Pfeils R1 angetrieben wird, rollen die Kugeln in der in Fig. 9 dargestellte Lage in der Ecke des Keilraums und sind von der Innenfläche des übergreifenden Abschnitts der Nockenscheibe 78 entfernt, die in Fig. 9 mit einer unterbrochenen Linie angedeutet ist. Bei dieser Drehrichtung des Schrittmotors wird nun das Rollenzählwerk über die erste Triebscheibe 85 im Sinne größerwerdender Zählwerke verstellt, während die Nockenscheibe 78 nicht mitgenommen wird. Erhält jedoch der Motor aufgrund eines die Rückstellung bewirkenden Impulspakets Statorspannungen, die eine Drehung in Richtung R2 des Ritzels 38 hervorrufen, so bewegen sich die Kugeln 93, 94 in den verjüngenden Teil der Keilräume 91, 92 und verkeilen sich zwischen dem in Fig. 9 dargestellten waagerechten Abschnitt des Keilraums an dem Innenabschnitt 90 der ersten Triebscheibe sowie der zylindrischen Innenfläche der Nockenscheibe 78. In diesem Fall wird die Nocke 88 in Fig. 11 ebenfalls in Richtung R2 bewegt, stößt gegen den Nullstellhebel 89 und nimmt diesen in die bei 89a gezeichnete Lage mit, in welcher der Nullstellhebel das Rollenzählwerk über nicht dargestellte weitere Mittel zurückgestellt hat.

Aus Fig. 11 ist noch eine kreissegmentförmige Öffnung 95 in der Nockenscheibe 78 ersichtlich, durch die die Abtriebswelle 3 des Getriebes hindurchreicht - siehe Fig. 8. Die Erstreckung der Öffnung 95 in Umfangsrichtung reicht aus, ohne die Abtriebswelle 3 anstoßen zu lassen, da zur Rückstellung ein definierter Weg durch das genannte Impulspaket vorgegeben wird. Wenn der Rückstellvorgang beendet ist, kann der Nullstellhebel 89 durch nicht dargestellte Mittel die Nocke 88 wieder in die in Fig. 11 gezeigte Lage zurückstellen,und ein weiterer Zählvorgang kann beginnen.

Die dargestellte Anordnung eignet sich insbesondere zur Rückstellung eines Tageskilometerzählers in einem Kraftfahrzeug.

In Fig. 10 ist eine Variante der Freilaufkupplung dargestellt, die hier als Zahnrichtgesperre ausgebildet ist. In Fig. 10 ist das erste Triebrad mit 96 bezeichnet, in dessen Innenverzahnung wiederum das Ritzel 13 eingreift. Das Triebrad ist um die Achse 80 drehbar. Die Besonderheit dieses Triebrades besteht darin, daß es außen als Sperrklinkenrad 97 geformt ist. In die Sperrklinken des Sperrklinkenrads greift unter dem Andruck einer Feder 98 eine Sperrklinke 99 ein, die an dem Nullstellhebel 89 schwenkbar gelagert ist. - Wenn das erste Triebrad in Richtung R1 zum Verstellen des Zählers beim Hochzählen angetrieben wird, rutscht die Sperrklinke 99 über die Zähne des Sperrklinkenrads hinweg, wobei der Nullstellhebel 89 in der dargestellten Anfangslage verharrt. Jedoch wird bei Rückwärtsdrehung des Schrittmotors und damit des Ritzels 13 das erste Triebrad 96 in Richtung R2 angetrieben, wobei sich das Sperrklinkenrad 97 mit der Sperrklinke 99 verhakt, die damit den Nullstellhebel in die Nullstellposition bei 89a verstellt. Mit nicht dargestellten Mitteln, insbesondere Herzkurven, erfolgt somit eine Rückstellung des Rollenzählwerks durch den gleichen Schrittmotor, der auch das Hochzählen des Rollenzählwerks in einer Bewegungsphase bewirkt.

## Patentansprüche

1. Einrichtung zur Verstellung eines rückstellbaren mechanischen Zählwerks, insbesondere eines Rollenzählwerks zur Wegstreckenzählung, mit einem Schrittmotor, der als Zwei-Phasenschrittmotor mit einem Rotor, der insbesondere aus einem Dauermagneten mit sich diametral gegenüberliegenden Dauermagnetpolen besteht, sowie mit einer Spulenanordnung, die in einem Winkelabstand von insbesondere 90° zueinander angeordnete Spulen aufweist, ausgebildet ist und über ein Getriebe mit dem Zählwerk in Verbindung steht,
**dadurch gekennzeichnet**,
daß der Schrittmotor einen in zwei Teile (15, 16) geteilten Spulenkörper (14) zur Aufnahme der Spulen aufweist, in welchem Lager (36, 37) der Welle (35) des Rotors (32) dergestalt ausgeformt sind, daß die Welle auf wenigstens einer genannt vorderen Außenseite (12) aus dem Spulenkörper (14) herausragt, daß auf dieser Außenseite das entsprechende der beiden Teile (15, 16) des Spulenkörpers (14) Befestigungselemente zur Anbringung eines Zwischenkörpers (2) aufweist, der das Getriebe umschließt, in welches die aus der vorderen Außenseite (12) des Spulenkörpers (1) herausragende Welle (35) mittels eines Ritzels (13) eingreift, und daß das Getriebe außer mit dem Zählwerk über eine Freilaufkupplung (91 - 94) mit einer Rückstelleinrichtung insb. Nullstellhebel (89) des Zählwerks insb. Zahlenrolle (79) in Verbindung steht.

2. Einrichtung nach Anspruch 1,
**gekennzeichnet durch**
eine exzentrisch angeordnete Abtriebswelle (3) des Getriebes, die aus dem Zwischenkörper (2) auf dessen dem Spulenkörper (14) abgewandter Seite (8) herausragt.

3. Einrichtung zur Verstellung eines rückstellbaren Rollenzählwerks nach Anspruch 1,
**dadurch gekennzeichnet**,
daß die Freilaufkupplung (91-94)in einem ersten Triebrad des Rollenzählwerks ausgebildet ist, daß das erste Triebrad eine mit der Abtriebswelle (3 ) des Getriebes in Verbindung stehende Triebscheibe (85) und eine gleichachsig mit der Triebscheibe drehbar gelagerte Nockenscheibe (78) umfaßt, die eine die Rückstelleinrichtung betätigende Nocke (88) aufweist, und daß zwischen der Triebscheibe und der Nockenscheibe wenigstens ein ein bewegliches Mitnahmeelement (Kugel 93) aufweisender Keilraum dergestalt ausgeformt ist, daß bei einer Drehung der Triebscheibe (85) in einer ersten Richtung (R2) sich die Triebscheibe und die Nockenscheibe (78) durch das Mitnahmeelement miteinander verkeilen und daß in einer zweiten, entgegengesetzten Drehrichtung (R1) die Triebscheibe gegenüber der Nockenscheibe frei läuft.

4. Einrichtung nach Anspruch 3,
**dadurch gekennzeichnet**,
daß die Nockenscheibe (78) mit einer zylindrischen Innenform (90) die Triebscheibe (85) teilweise umgreift und daß zwei einander diametral gegenüberliegende Keilräume (91, 92) in einem übergriffenen Innenabschnitt (90) der Triebscheibe ausgeformt sind.

5. Einrichtung nach Anspruch 3 oder 4,
**dadurch gekennzeichnet**,
daß das bewegliche Mitnahmeelement (93) aus einer Kugel besteht.

6. Einrichtung nach Anspruch 3 oder 4,
**gekennzeichnet durch**
eine Rolle als bewegliches Mitnahmeelement.

7. Einrichtung nach Anspruch 3 oder 4,
**gekennzeichnet durch**
einen Keil als bewegliches Mitnahmeelement.

8. Einrichtung nach Anspruch 3 oder 4,
**dadurch gekennzeichnet,**
daß die Freilaufkupplung an einem ersten Triebrad (96) des Rollenzählwerks als Zahnrichtgesperre ausgebildet ist, welches ein Sperrklinkenrad (97) an dem ersten Triebrad (96) sowie eine in das Sperrklinkenrad eingreifende Sperrklinke (99) umfaßt, welche mit der Rückstelleinrichtung (Nullstellhebel 89) verbunden ist.

9. Einrichtung nach Anspruch 1
**dadurch gekennzeichnet,**
daß der Spulenkörper (14) im wesentlichen in einer Querschnittsebene (A-A) geteilt ist.

10. Einrichtung nach Anspruch 9
**dadurch gekennzeichnet**,
daß aus jedem der beiden Teile (15, 16) des Spulenkörpers (14) eines der Lager (36, 37) der Welle (35) ausgeformt ist.

11. Einrichtung nach Anspruch 1,
**dadurch gekennzeichnet**,
daß der Spulenkörper (14) innen zylindrisch mit vier längs des Umfangs äquidistant angeordneten Stegen (17 - 20), die außen zylindrisch verlaufen, geformt ist und daß auf den Spulenkörper (14) konzentrisch ein Abschirmring (48) aufschiebbar ist, zu dem der Zwischenkörper (2) fluchtet.

12. Einrichtung nach Anspruch 1,
**dadurch gekennzeichnet,**
daß die an dem Spulenkörper (14) vorgesehenen Befestigungselemente nasenförmige Klipse (24 - 27) zur klammernden Anbringung des Zwischenkörpers sind.

13. Einrichtung nach Anspruch 12,
**dadurch gekennzeichnet**,
daß der konzentrische Abschirmring (48) auf dem Spulenkörper (14) an einer erhabenen Innenseite der Klipse (24 - 27) axial anstößt.

14. Einrichtung nach Anspruch 1,
**dadurch gekennzeichnet**,
daß in dem Spulenkörper (14) parallel zu der Welle (35) Bohrungen (38 - 43) für Anschlußstifte (44 - 47) vorgesehen sind, die zumindest aus einer Außenseite des Spulenkörpers (14) herausragen.

## Claims

1. A device for adjusting a resettable mechanical counter, particularly a roller type counter for distance counting, with a stepper motor which is constructed as a two-phase stepper motor with a rotor which consists in particular of a permanent magnet with two diametrically opposed permanent magnet poles, and with a coil arrangement which comprises coils disposed in particular at an angular separation of 90° to each other, which stepper motor is connected via a transmission to the counter, characterised in that the stepper motor comprises a coil housing (14) which is split into two parts (15, 16) for receiving the coils, in which coil housing bearings (36, 37) are formed for the shaft (35) of the rotor (32) in such a way that the shaft projects from the coil housing (14) on at least one given front external face (12), that the corresponding one of the two parts (15, 16) of the coil housing (14) has fastening elements on this external face for mounting an intermediate body (2) which encloses the transmission in which the shaft (35) projecting from the front external face (12) of the coil housing (14) engages by means of a pinion (13), and that the transmission is also connected to the counter via a freewheel clutch (91 - 94) having a resetting device, particularly a zeroing lever (89) of the counter, particularly a roller type counter (79).

2. A device according to claim 1 characterised by an eccentrically disposed driven shaft (3) of the transmission which projects from the intermediate body (2) on the face (8) of the latter remote from the coil housing (14).

3. A device for adjusting a resettable roller type counter according to claim 1, characterised in that the freewheel clutch (91 - 94) is constructed in a first driving gear of the roller type counter, that the first driving gear comprises a driving plate (85) connected to the driven shaft (3) of the transmission and a cam plate (78) which is rotatably mounted on the same axis as the driving plate and which comprises a cam (88) which operates the resetting device, and that at least one wedge space comprising a movable driver element (ball 93) is formed between the driving disc and the cam disc in such a way that when the driving disc (85) rotates in a first direction (R2) the driving disc and the cam disc (78) are wedged to each other by the driver element, and that in a second, opposite direction of rotation (R1) the driving disc runs freely in relation to the cam disc.

4. A device according to claim 3, characterised in that a cylindrical internal shape (90) on the cam disc (78) partially encompasses the driving disc (85) and that two diametrically opposed wedge spaces (91, 92) are formed in an overlapped internal section (90) of the driving disc.

5. A device according to claim 3 or 4, characterised in that the movable driver element (93) consists of a ball.

6. A device according to claim 3 or 4, characterised by a roller as the movable driver element.

7. A device according to claim 3 or 4, characterised by a wedge as the movable driver element.

8. A device according to claim 3 or 4, characterised in that the freewheel clutch is constructed on a first driving gear (96) of the roller type counter as a directional toothed locking mechanism which comprises a ratchet wheel (97) on the first driving gear (96) and a pawl (99) which engages in the ratchet wheel and which is attached to the resetting device (zeroing lever 89).

9. A device according to claim 1, characterised in that the coil housing (14) is split substantially on a cross-sectional plane (A-A).

10. A device according to claim 9, characterised in that one of the bearings (36, 37) of the shaft (35) is formed from each of the two parts (15, 16) of the coil housing (14).

11. A device according to claim 1, characterised in that the coil housing (14) is shaped cylindrically inside with four webs (17 - 20) which are disposed equidistantly along the circumference and which extend cylindrically on the outside, and that a screening ring (48), with which the intermediate body (2) is aligned, can be slid concentrically on to the coil housing (14).

12. A device according to claim 1, characterised in that the fastening elements provided on the coil housing (14) are lug-shaped clips (24 - 27) for mounting the intermediate body in a clamping manner.

13. A device according to claim 12, characterised in that the concentric screening ring (48) on the coil housing (14) axially abuts against an elevated internal face of the clips (24 - 27).

14. A device according to claim 1, characterised in that holes (38 - 43) for connecting pins (44 - 47) are provided in the coil housing (14) parallel to the shaft (35), which connecting pins protrude from at least one external face of the coil housing (14).

## Revendications

1. Dispositif de rappel d'un compteur mécanique à remise à zéro, notamment un compteur à rouleaux chiffrés destiné à mesurer un trajet, dispositif comportant un moteur pas à pas qui est monté en moteur biphasé et comporte un rotor composé notamment d'un aimant permanent à pôles diamétralement opposés et d'un bobinage formé de bobines disposées en particulier à 90° l'une de l'autre et qui est relié au compteur par l'entremise d'une transmission, ce dispositif étant caractérisé en ce que le moteur pas à pas comporte un corps (14) destiné à loger les bobines, qui est divisé en deux parties (15, 16) et dans lequel les paliers (36, 37) de l'arbre (35) du rotor (32) sont formés de manière que cet arbre fasse saillie de ce corps d'un côté (12) au moins, appelé côté antérieur ; en ce que, sur ce côté antérieur, celle des deux parties (15, 16) correspondante du corps présente des éléments de fixation destinés à monter un corps intermédiaire (2), qui entoure la transmission, avec laquelle vient en prise un pignon (13) de l'extrémité de l'arbre (35) faisant saillie du côté antérieur du corps (14) ; et en ce que la transmission est reliée, non seulement au compteur, mais en outre, par l'entremise d'un embrayage (91-94) à roue libre, à un dispositif de remise à zéro, notamment un levier de rappel (89) du compteur, notamment du compteur à rouleaux (79).

2. Dispositif selon la revendication 1, caractérisé en ce que l'arbre de sortie (3) de la transmission est disposé excentriquement, et fait saillie du corps intermédiaire (2) du côté (8) de celui-ci éloigné du corps (14) porte-bobines.

3. Dispositif selon la revendication 1, caractérisé en ce que l'embrayage à roue libre (91-94) est disposé dans une première roue menante du compteur à rouleaux ; en ce que cette première roue comprend un disque menant (85) relié à l'arbre de sortie (3) de la transmission et un disque (78) qui est monté coaxialement à ce disque menant, et qui comporte un bras (88) actionnant le dispositif de remise à zéro ; et en ce qu'il est formé entre ce disque menant et le disque à bras au moins un évidement cunéiforme contenant un élément mobile d'entraînement (bille 93) et conformé de manière que, lorsque le disque menant (85) tourne dans un premier sens (R2), il se coince avec le disque (78) par l'entremise de l'élément mobile d'entraînement et que, dans un second sens de rotation (R1) opposé, le disque menant tourne librement vis-à-vis du disque à bras.

4. Dispositif selon la revendication 3, caractérisé en ce que le disque (78) à bras entoure partiellement un bossage cylindrique (90) du disque menant (85) et en ce que deux évidements cunéiformes (91, 92) diamétralement opposés sont formés dans ce bossage (90) du disque menant.

5. Dispositif selon la revendication 3 ou 4, caractérisé en ce que l'élément mobile (93) d'entraînement est une bille.

6. Dispositif selon la revendication 3 ou 4, caractérisé en ce que l'élément mobile d'entraînement est un rouleau.

7. Dispositif selon la revendication 3 ou 4, caractérisé en ce que l'élément mobile d'entraînement est un coin.

8. Dispositif selon la revendication 3 ou 4, caractérisé en ce que l'embrayage à roue libre est un encliquetage à rochet formé sur une première roue menante (96) du compteur à rouleaux et comportant sur cette roue (96) un rochet (97) ainsi qu'un cliquet (99) en prise avec les dents de ce rochet et relié au dispositif de remise à zéro (levier 89).

9. Dispositif selon la revendication 1, caractérisé en ce que le corps (14) porte-bobines est divisé dans un plan (A-A) sensiblement transversal.

10. Dispositif selon la revendication 9, caractérisé en ce que chacun des paliers (36, 37) de l'arbre (35) est formé dans une partie (15, 16) respective du corps (14) porte-bobines.

11. Dispositif selon la revendication 1, caractérisé en ce que le corps (14) porte-bobines est intérieurement cylindrique et présente, sur son pourtour, quatre nervures (17-20) équidistantes et qui sont extérieurement cylindriques; et en ce qu'une bague-écran (48), avec laquelle le corps intermédiaire est aligné, peut être glissée concentriquement sur ce corps (14) porte-bobines.

12. Dispositif selon la revendication 1, caractérisé en ce que les éléments de fixation formés sur le corps porte-bobines (14) sont des languettes (24-27) en forme de crochets, destinées à fixer le corps intermédiaire (2) par agrafage.

13. Dispositif selon la revendication 12, caractérisé en ce que la bague-écran (48) placée concentriquement sur le corps (14) porte-bobines vient s'appliquer axialement contre un flanc intérieur surélevé des languettes (24-27) d'agrafage.

14. Dispositif selon la revendication 1, caractérisé en ce que le corps (14) porte-bobines est percé de trous (38-43) parallèles à l'axe, pour des broches (4-7) de jonction qui font saillie d'au moins une face de ce corps (14).
